# EUROPÄISCHE PATENTSCHRIFT

(11) **EP 3 662 088 B1**
(45) Veröffentlichungstag und Bekanntmachung des Hinweises auf die Patenterteilung: **14.04.2021**
(21) Anmeldenummer: 18739507.4
(22) Anmeldetag: 05.07.2018
(51) Int. Cl.: C21C 5/56, F27B 3/08, F27B 3/18, F27D 13/00, F27D 3/00, C21C 5/52

(54) **SCHROTTHALTEFINGER MIT KÜHLWASSERVERSORGUNG**
SCRAP HOLDING FINGER HAVING A COOLING WATER SUPPLY
DOIGT DE RETENUE POUR FERRAILLE AVEC ALIMENTATION EN EAU DE REFROIDISSEMENT

(30) Priorität: 31.07.2017 DE 102017213201
(43) Veröffentlichungstag der Anmeldung: 10.06.2020
(73) Patentinhaber: SMS Group GmbH, 40237 Düsseldorf (DE)
(72) Erfinder: KALUZA, Thomas, 46539 Dinslaken (DE)
(74) Vertreter: Klüppel, Walter
(86) Internationale Anmeldenummer: PCT/EP2018/068284
(87) Internationale Veröffentlichungsnummer: WO 2019/025119

(56) Entgegenhaltungen:
- WO-A1-99/16728
- DE-A1-102010 041 209
- DE-A1-102010 049 046

## Beschreibung

### Technisches Gebiet

Die Erfindung betrifft eine Fingeranordnung zum Halten von Metallteilen während eines Vorwärmprozesses, vorzugsweise zur Verwendung in einem Schacht oberhalb eines Schmelzofengefäßes zum Einschmelzen der Metallteile, wobei die Fingeranordnung einen Finger aufweist, der mit einem Kühlmittel durchströmbar ist. Die Erfindung betrifft ferner eine Vorrichtung zum Vorwärmen der Metallteile sowie einen Schmelzofen.

### Hintergrund der Erfindung

Zum Schmelzen von metallischem Schrott in einem Schmelzofen, beispielsweise Elektrolichtbogenofen, kann es nötig oder zumindest nützlich sein, die Metallteile vorzuwärmen. Zu diesem Zweck können die heißen Abgase, die im Schmelzofen erzeugt werden, genutzt werden, indem ein oder mehrere bewegliche Finger in einen Schacht oberhalb des Schmelzofens eingebaut werden. Die Aufgabe der Finger besteht darin, die von oben eingebrachten Metallteile zu halten und dadurch eine Erwärmung derselben zu ermöglichen. Nach erfolgter Erwärmung werden die Finger mittels Hydraulikzylindern vollständig oder teilweise aus dem Schacht herausbewegt, wodurch die Metallteile in ein Ofengefäß darunter fallen, in dem sie schließlich eingeschmolzen werden.

Derartige Finger sind beispielsweise in der DE 699 06 630 T2 und WO 95/04910 A1 beschrieben.

Es ist bekannt, die Finger während der Erwärmung der Metallteile zu kühlen, da sie einer hohen thermischen Strahlung ausgesetzt sind. Dazu werden die Finger auf kontinuierliche Weise mit Kühlwasser durchströmt. Die Kühlwasserversorgung wird üblicherweise durch Gummischläuche realisiert.

Neben der thermischen Beanspruchung ist im Wesentlichen die mechanische Belastung maßgeblich für einen hohen Verschleiß der Gummischläuche. Die mechanische Belastung tritt beim Bewegen der Finger durch die Hydraulikzylinder auf. Dabei bewegen sich die U-förmig abgehängten Schläuche hin und her, wobei sie einer oftmals übermäßigen Biegebeanspruchung ausgesetzt sind, die eine Materialermüdung zur Folge hat und schließlich zum Reißen der Schläuche führen kann.

### Darstellung der Erfindung

Eine Aufgabe der Erfindung besteht darin, eine Fingeranordnung zum Halten von Metallteilen während eines Vorwärmprozesses, vorzugsweise zur Verwendung in einem Schacht oberhalb eines Schmelzofengefäßes zum Einschmelzen der Metallteile, eine Vorrichtung zum Vorwärmen von Metallteilen sowie einen Schmelzofen anzugeben, deren Haltbarkeit und Wartbarkeit verbessert sind.

Gelöst wird die Aufgabe mit einer Fingeranordnung mit den Merkmalen des Anspruchs 1, einer Vorrichtung zum Vorwärmen von Metallteilen mit den Merkmalen des Anspruchs 7 sowie einem Schmelzofen mit den Merkmalen des Anspruchs 9. Vorteilhafte Weiterbildungen folgen aus den Unteransprüchen, der folgenden Darstellung der Erfindung sowie der Beschreibung bevorzugter Ausführungsbeispiele.

Die erfindungsgemäße Fingeranordnung ist zum Halten von Metallteilen, vorzugsweise von metallischem Schrott, während eines Vorwärmprozesses vorgesehen. Vorzugsweise ist die Fingeranordnung zur Verwendung in einem Schacht oberhalb eines Schmelzofengefäßes zum Einschmelzen der Metallteile eingerichtet.

Die DE 10 2010 041 209 A1 beschreibt eine Vorwärmvorrichtung für Stahlschrott und ein damit ausgestattetes metallurgisches Schmelzgefäß. Die Vorwärmvorrichtung weist als Verschlusselemente steg- oder stabförmig ausgebildete Finger auf, die auf einer Kreisbahn verfahrbar und von einer Kühlflüssigkeit durchströmbar sind.

Die DE 10 2010 049 046 A1 beschreibt eine Kühlwasserführung für einen kippbaren Schmelzofen mit einem anheb- und schwenkbaren Ofendeckel.

Die Fingeranordnung weist einen Finger auf, der zwischen einem eingefahrenen Zustand und einem ausgefahrenen Zustand bewegbar ist und eingerichtet ist, um Metallteile im ausgefahrenen Zustand zu halten. Zu diesem Zweck kann die Bewegung des Fingers zwischen den beiden Zuständen eine Schwenkbewegung sein. Vorzugsweise vollzieht der Finger zwischen dem eingefahrenen Zustand und dem ausgefahrenen Zustand eine kombinierte Bewegung aus einer Schwenkbewegung und einer Translationsbewegung, um ein zuverlässiges Halten der Metallteile im ausgefahrenen Zustand und ein zuverlässiges Freigeben der Metallteile im eingefahrenen Zustand zu gewährleisten. Der Finger ist ein länglicher Körper, der vorzugsweise aus einem hitzebeständigen stabilen Metall gefertigt ist. So kann der Finger beispielsweise aus miteinander verschweißten Stahlplatten hergestellt sein. Der Finger weist einen Kühlmittelzulauf und einen Kühlmittelablauf sowie einen oder mehrere damit verbundene Kanäle im Innern des Fingers auf, wodurch der Finger mit einem Kühlmittel durchströmbar ist. Das Kühlmittel ist vorzugsweise Wasser oder ein flüssiges Mehrstoffkühlmittel auf Wasserbasis. Mit den Bezeichnungen "Kühlmittelzulauf' bzw. "Kühlmittelablauf' sind Leitungsabschnitte zum Transport des Kühlmittels bezeichnet, die den Kühlkreis im Innern des Fingers mit äußeren Leitungsabschnitten verbinden. Der Kühlmittelzulauf und/oder Kühlmittelablauf können beispielsweise als lösbare/verbindbare Leitungsanschlüsse ausgebildet sein, sie können aber auch Rohrabschnitte bezeichnen, die den inneren Kühlkreis auf integrale oder einstückige Weise mit äußeren (relativ zum Finger) Leitungen verbinden.

Die Fingeranordnung weist ferner eine Fingerkühlung auf, die ein System aus Leitungen bzw. Rohren zum Zuführen des Kühlmittels zum Kühlmittelzulauf des Fingers und Abführen des erwärmten Kühlmittels vom Kühlmittelablauf des Fingers bezeichnet. Die Fingeranordnung gemäß der Erfindung weist ein oder mehrere Zulaufdrehgelenke, die Rohrdrehgelenke sind, und wenigstens zwei damit verbundene Rohrstücke, wobei eines der Rohrstücke mit dem Kühlmittelzulauf verbunden ist, sowie ein oder mehrere Ablaufdrehgelenke, die Rohrdrehgelenke sind, und wenigstens zwei damit verbundene Rohrstücke auf, wobei eines der Rohrstücke mit dem Kühlmittelablauf verbunden ist. Die Bezeichnungen "Rohr", "Rohrstück", "Leitung" und dergleichen werden synonym verwendet, wobei darauf hingewiesen sei, dass der Querschnitt der Rohrstücke weder kreisförmig noch über die Länge des Rohrstücks konstant sein muss. Rohrstücke können über lösbare Verbindungen oder integral, etwa durch verschweißen, oder einstückig miteinander verbunden sein. Vorzugsweise sind die Rohrstücke und/oder Rohrdrehgelenke aus einem starren unflexiblen Material, etwa Stahl, gefertigt, um zu verhindern, dass die Haltbarkeit aufgrund von Biegebelastungen beeinträchtigt wird.

Indem das Kühlmittel über Rohrstücke und Rohrdrehgelenke dem Finger zugeführt wird, unterliegt die Verrohrung außerhalb des Fingers wohldefinierten Bewegungstrajektorien, wenn der Finger zwischen dem eingefahrenen und ausgefahrenen Zustand hin und her bewegt wird. Insbesondere sind die Rohrstücke nur geringen mechanischen Belastungen ausgesetzt. Dadurch wird die Haltbarkeit der Fingerkühlung deutlich verbessert, insbesondere in schwierigen Arbeitsumgebungen, in denen die Finger und die Komponenten der Kühlung hohen thermischen Strahlungen und Konvektionsströmen ausgesetzt sind. Ein weiterer Beitrag der gelenkartigen Rohrverbindungen besteht darin, dass etwaige an den Rohrdrehgelenken auftretende Leckagen nicht plötzlich und unmittelbar zum Vorschein kommen, sondern diese werden erst nach und nach undicht, wodurch eine frühzeitige Schadenserkennung und -behebung möglich ist. Dadurch verbessert sich die Wartbarkeit der Vorrichtung.

Vorzugsweise weist die Fingerkühlung eine Zulaufgelenkschere, die mit dem Kühlmittelzulauf verbunden ist, und eine Ablaufgelenkschere, die mit dem Kühlmittelablauf verbunden ist, auf, wobei die Zulaufgelenkschere und die Ablaufgelenkschere jeweils eine Gelenkschere ist, die drei Rohrdrehgelenke und Rohrstücke, welche die drei Rohrdrehgelenke in Reihe verbinden, aufweist. In anderen Worten: Die Verrohrung des Kühlmittelzulaufs und des Kühlmittelablaufs wird vorzugsweise jeweils durch eine Gelenkschere realisiert, wodurch vielfältige Bewegungstrajektorien unter geringen mechanischen Belastungen realisierbar sind. Insbesondere wenn der Finger zwischen seinen beiden Zuständen, dem eingefahrenen und ausgefahrenen Zustand, keine reine Schwenkbewegung sondern eine kombinierte Bewegung aus einer rotatorischen und einer translatorischen Komponente durchführt, bietet der Einsatz einer oder mehrerer Gelenkscheren eine technisch einfach zu realisierende Verrohrung mit den oben dargelegten Wirkungen.

Vorzugsweise weist die Fingeranordnung ein Gehäuse auf, wodurch sie modular aufbaubar ist. Auf diese Weise kann der Schmelzofen nicht nur auf einfache Weise um eine oder mehrere Fingeranordnungen erweitert werden, sondern die Fingeranordnungen lassen sich unkompliziert warten und reparieren.

Vorzugsweise sind ein oder mehrere der Zulaufdrehgelenke relativ zum Gehäuse verfahrbar bzw. nicht-stationär vorgesehen, während ferner ein oder mehrere Zulaufdrehgelenke relativ zum Gehäuse stationär vorgesehen sind. Die stationären Zulaufdrehgelenke sind vorzugsweise am Gehäuse befestigt. Im Fall der oben dargelegten Gelenkschere sind vorzugsweise genau zwei Zulaufdrehgelenke nicht-stationär vorgesehen, während genau ein Zulaufdrehgelenk stationär vorgesehen ist. Analog sind vorzugsweise ein oder mehrere der Ablaufdrehgelenke relativ zum Gehäuse verfahrbar bzw. nicht-stationär vorgesehen, während ferner ein oder mehrere Ablaufdrehgelenke relativ zum Gehäuse stationär vorgesehen sind. Die stationären Ablaufdrehgelenke sind vorzugsweise am Gehäuse befestigt. Im Fall der oben dargelegten Gelenkschere sind vorzugsweise genau zwei Ablaufdrehgelenke nicht-stationär vorgesehen, während genau ein Ablaufdrehgelenk stationär vorgesehen ist. Eine so aufgebaute Verrohrung für die Zufuhr und Abfuhr des Kühlmittels eignet sich besonders für einen Finger, dessen Bewegungstrajektorie durch einen Kniehebelmechanismus definiert wird.

Vorzugsweise weist die Fingeranordnung einen Hydraulikzylinder zum Betätigen des Fingers auf, wobei der Hydraulikzylinder mechanisch mit dem Finger gekoppelt ist. Die mechanische Kopplung kann über einen Hebelmechanismus erfolgen, vorzugsweise über einen Kniehebelmechanismus, um die oben dargelegte kombinierte Bewegungstrajektorie des Fingers zu realisieren.

Die dargelegte Fingeranordnung ist in erster Linie zur Verwendung in einem Elektrolichtbogenofen ausgelegt. Allerdings kann der Finger auch in Schmelzöfen anderer Bauart eingesetzt werden.

Die oben dargelegte Aufgabe wird ferner durch eine Vorrichtung zum Vorwärmen von Metallteilen, vorzugsweise von metallischem Schrott, gelöst, wobei die Vorrichtung einen Schacht und einen oder mehrere Fingeranordnungen aufweist. Hierbei ragen die Finger jeweils im ausgefahrenen Zustand in den Schacht hinein, um dadurch die Metallteile zu halten. Nach erfolgter Erwärmung werden die Finger in den eingefahrenen Zustand gebracht, wodurch die Metallteile zum Einschmelzen in ein unterhalb des Schachts angeordnetes Ofengefäß fallen können.

Vorzugsweise sind mehrere Finger vorgesehen, die in ihren ausgefahrenen Zuständen in unterschiedlichen Längen, vorzugsweise konzentrisch, in den Schacht hineinragen, wodurch Metallteile unterschiedlicher Beschaffenheit auf zuverlässige Weise gehalten und freigegeben werden können.

Die oben dargelegte Aufgabe wird ferner durch einen Schmelzofen, vorzugsweise Elektrolichtbogenofen, mit einem Ofengefäß und einer Vorrichtung zum Vorwärmen von Metallteilen gelöst.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale realisiert werden, insofern sich die Merkmale nicht widersprechen. Die folgende Beschreibung bevorzugter Ausführungsbeispiele erfolgt mit Bezug auf die begleitenden Zeichnungen.

### Kurze Beschreibung der Figuren

Die Figur 1A zeigt eine Fingeranordnung zum Halten von Metallteilen auf eine perspektivische Weise im eingefahrenen Zustand. Die Figur 1B zeigt die Fingeranordnung der Figur 1A als Seitenansicht.

Die Figur 2A zeigt eine Fingeranordnung zum Halten von Metallteilen auf eine perspektivische Weise im ausgefahrenen Zustand. Die Figur 2B zeigt die Fingeranordnung der Figur 2A als Seitenansicht.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen, und auf eine wiederholende Beschreibung dieser Elemente wird teilweise verzichtet, um Redundanzen zu vermeiden.

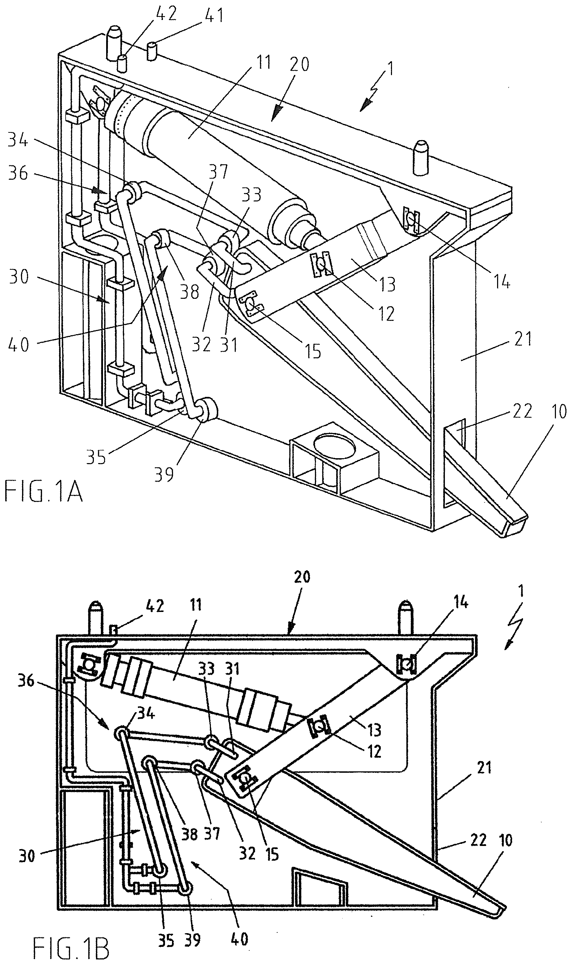

Die Figur 1A zeigt eine Fingeranordnung 1 zum Halten von Metallteilen, vorzugsweise von metallischem Schrott, auf eine perspektivische Weise. Die Fingeranordnung 1 ist zur Verwendung in einem Schacht oberhalb eines Schmelzofengefäßes zum Einschmelzen der Metallteile vorgesehen. Die Figur 1B zeigt die Fingeranordnung 1 der Figur 1A in einer Seitenansicht.

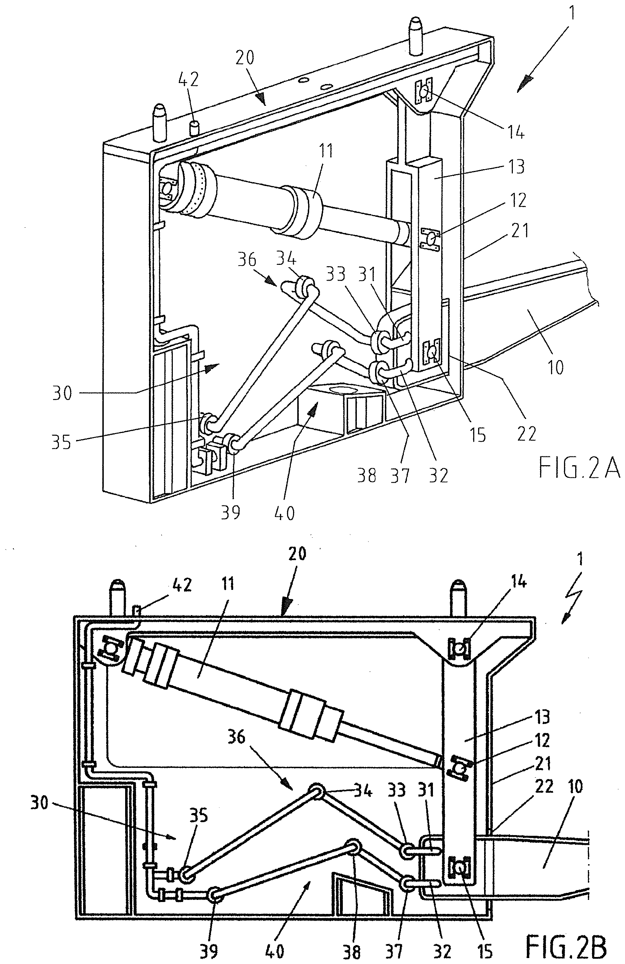

Die Fingeranordnung 1 weist einen Finger 10 auf, der zum Halten der Metallteile vorgesehen ist, wodurch die Metallteile aufgrund der Abwärme und Strahlungswärme eines nicht dargestellten Schmelzofens erwärmt, bevor sie dem Ofengefäß zugeführt werden. Die Figuren 1A und 1B zeigen den Finger 10 im eingefahrenen Zustand, in dem dieser zum großen Teil hinter eine Vorderwand 21 zurückgezogen ist. Die Figuren 2A und 2B zeigen den Finger 10 im ausgefahrenen Zustand.

Die Vorderwand 21 kann Teil eines Schachts sein, in den die Metallteile eingebracht werden. Der Schacht wiederum kann Teil eines Schmelzofens oder einer eigenständigen Vorrichtung sein, die auf den Schmelzofen aufgesetzt ist. Im vorliegenden Ausführungsbeispiel bildet die Vorderwand 21 zusammen mit weiteren Wänden ein Gehäuse 20 der Fingeranordnung 1. Dadurch lässt sich die Fingeranordnung 1 modular aufbauen, wodurch der Schmelzofen nicht nur auf einfache Weise um eine oder mehrere Fingeranordnungen 1 erweitert werden kann, sondern die Fingeranordnungen 1 können somit auf unkomplizierte Weise ausgetauscht, gewartet und repariert werden.

Die Vorderwand 21 weist eine Öffnung 22 auf, durch die der Finger 10 in den Schacht einfahrbar und ausfahrbar ist. Die Betätigung des Fingers 10 erfolgt auf geeignete Weise mittels eines Hydraulikzylinders 11, der im vorliegenden Beispiel über ein erstes Gelenk 12 mit einem Schwenkhebel 13 verbunden ist, der wiederum an einem Ende über ein zweites Gelenk 14 drehbar gelagert ist und am anderen Ende über ein drittes Gelenk 15 mit dem Finger 10 gekoppelt ist. Das erste Gelenk 12 und das dritte Gelenk 15 sind nicht-stationäre Gelenke, d.h. sie sind relativ zum Gehäuse 20 verfahrbar. Das zweite Gelenk 14 hingegen ist stationär vorgesehen, beispielsweise am Gehäuse 20 befestigt, wodurch ein Kniehebelmechanismus zum Verfahren des Fingers 10 ausgebildet wird.

Wenn in diesem Zusammenhang die Bezeichnungen "erstes", "zweites" usw. (beispielsweise in "erstes Gelenk", "zweites Gelenk" usw.) verwendet werden, ist damit keine numerische Ordnung verbunden, sie dienen lediglich der Benennung der entsprechenden Komponenten.

Durch Zuführen/Abführen eines Hydraulikfluids zum/vom Hydraulikzylinder 11 wird über den beschriebenen Hebelmechanismus der Finger 10 auf die oben dargelegte Weise betätigt. Es sei darauf hingewiesen, dass der in den Figuren dargestellte Hebelmechanismus nur beispielhaft ist. Das Einfahren/Ausfahren und/oder Schwenken des Fingers 10 lässt sich auch auf andere Weise realisieren. Wichtig ist, dass die Position des Fingers 10 so veränderbar ist, dass im ausgefahrenen Zustand (der auch einen ausgeschwenkten Zustand umfasst) der Finger 10 so im Schacht angeordnet ist, dass dieser Metallteile halten kann, während die Metallteile im eingefahrenen Zustand (der auch einen eingeschwenkten Zustand umfasst) durch den Schacht in das darunter befindliche Ofengefäß fallen können.

Am hinteren Ende des Fingers 10 befinden sich ein Kühlmittelzulauf 31 und ein Kühlmittelablauf 32, die Bestandteile einer Fingerkühlung 30 sind. Durch den Kühlmittelzulauf 31 wird dem Finger 10 Kühlmittel, beispielsweise Wasser oder ein Mehrstoffkühlfluid auf Wasserbasis, zugeführt, das anschließend den Finger 10 über nicht dargestellte Kanäle durchströmt und diesen über den Kühlmittelablauf 32 wieder verlässt. Die Fingerkühlung 30 weist weitere Komponenten auf, so etwa Rohre, Rohrdrehgelenke usw., die im Folgenden anhand des in den Figuren dargestellten Ausführungsbeispiels genauer beschrieben werden.

Der Kühlmittelzulauf 31 ist über ein Rohrstück mit einem ersten Zulaufdrehgelenk 33 verbunden. Dieses wiederum ist über ein Rohrstück mit einem zweiten Zulaufdrehgelenk 34 verbunden. Das zweite Zulaufdrehgelenk 34 ist über ein Rohrstück mit einem dritten Zulaufdrehgelenk 35 verbunden. Während das erste Zulaufdrehgelenk 33 und das zweite Zulaufdrehgelenk 34 nicht-stationäre Rohrdrehgelenke sind, die jeweils zwei Rohrstücke auf schwenkbare Weise verbinden, wobei die beiden Rohrdrehgelenke relativ zum Gehäuse 20 verfahrbar sind, ist das dritte Zulaufdrehgelenk ein stationäres Rohrdrehgelenk, d.h. es ist relativ zum Gehäuse 20 stationär vorgesehen, also beispielsweise am Gehäuse 20 befestigt. Auf diese Weise wird eine Gelenkschere aufgebaut, die einen Teil des Kühlwasserzulaufwegs bildet und als Zulaufgelenkschere 36 bezeichnet wird. Die genannten Rohrstücke sind vorzugsweise stabile, nicht flexible Rohre, beispielsweise aus einem langlebigen und hitzebeständigen Metall.

Analog ist eine Gelenkschere als Teil des Kühlwasserablaufwegs aufgebaut, die als Ablaufgelenkschere 40 bezeichnet wird und ein erstes Ablaufdrehgelenk 37, ein zweites Ablaufdrehgelenk 38 und ein drittes Ablaufdrehgelenk 39 aufweist, die wie bei der Zulaufgelenkschere 36 über Rohrstücke miteinander verbunden sind. Dabei sind in dem obigen Sinne das erste Ablaufdrehgelenk 37 und das zweite Ablaufdrehgelenk 38 als nicht-stationäre Rohrdrehgelenke ausgebildet, während das dritte Ablaufdrehgelenk 39 als ein stationäres Rohrdrehgelenk ausgebildet ist.

Durch einen Gehäusezulauf 41 wird das Kühlwasser über einen stationären Rohrabschnitt dem dritten Zulaufdrehgelenk 35 zugeführt, das Kühlwasser strömt dann durch die Zulaufgelenkschere 36 in den Finger 10 und wird über die Ablaufgelenkschere 40 an einen Gehäuseablauf 42 transportiert. Der Gehäusezulauf 41 und der Gehäuseablauf 42 können Anschlüsse sein oder Rohrstücke, die das Kühlwasser von außen (bezüglich des Gehäuses 20) zuführen und nach außen abgeben.

Der oben dargelegte Aufbau realisiert eine beispielhafte Ausführungsform, wie eine Verrohrung mit Rohrdrehgelenken und Rohrstücken aussehen kann, um eine zuverlässige Kühlwasserzirkulation zu gewährleisten. Die beispielhaften Gelenkscheren 36 und 40 weisen je drei Rohrdrehgelenke auf, die mit Rohrstücken untereinander verbunden sind. Durch die Konstruktion unterliegen die Gelenkscheren 36 und 40 einer definierten Bewegung, die so ausgelegt ist, dass die Gelenkscheren 36 und 40 nur geringen mechanischen Belastungen ausgesetzt sind. Es sei darauf hingewiesen, dass die Gelenkscheren (oder allgemeiner, die Verrohrung) in Abhängigkeit der Bewegungstrajektorie des Fingers 10 anders verwirklicht werden können, als es in den Figuren dargestellt ist. Insbesondere kann der Aufbau der Gelenkscheren situationsbedingt vereinfacht werden. So können bei einem Finger 10, der zwischen dem eingefahrenen Zustand und dem ausgefahrenen Zustand eine reine Schwenkbewegung durchführt, der Kühlwasserzulaufweg und der Kühlwasserablaufweg mit je nur einem Rohrdrehgelenk realisiert werden, wenn der Kühlwasserzulauf 31 und der Kühlwasserablauf 32 so am Finger 10 vorgesehen sind, dass sie beim Schwenken des Fingers 10 eine Kreisbewegung um die zugehörigen Gelenke vollziehen.

Neben der besonderen Haltbarkeit der oben dargelegten gelenkartigen Rohrverbindungen in schwierigen Arbeitsumgebungen besteht ein weiterer Vorteil darin, dass etwaige an den Rohrdrehgelenken auftretende Leckagen nicht plötzlich und unmittelbar zum Vorschein kommen, sondern diese erst nach und nach undicht werden und somit eine frühzeitige Schadenserkennung und - behebung ermöglichen.

### Bezugszeichenliste

- 1: Fingeranordnung
- 10: Finger
- 11: Hydraulikzylinder
- 12: Erstes Gelenk
- 13: Schwenkhebel
- 14: Zweites Gelenk
- 15: Drittes Gelenk
- 20: Gehäuse
- 21: Vorderwand
- 22: Öffnung
- 30: Fingerkühlung
- 31: Kühlmittelzulauf
- 32: Kühlmittelablauf
- 33: Erstes Zulaufdrehgelenk
- 34: Zweites Zulaufdrehgelenk
- 35: Drittes Zulaufdrehgelenk
- 36: Zulaufgelenkschere
- 37: Erstes Ablaufdrehgelenk
- 38: Zweites Ablaufdrehgelenk
- 39: Drittes Ablaufdrehgelenk
- 40: Ablaufgelenkschere
- 41: Gehäusezulauf
- 42: Gehäuseablauf

## Patentansprüche

1. Fingeranordnung (1) zum Halten von Metallteilen während eines Vorwärmprozesses, vorzugsweise zur Verwendung in einem Schacht oberhalb eines Schmelzofengefäßes zum Einschmelzen der Metallteile, wobei die Fingeranordnung (1) aufweist:
einen Finger (10), der zwischen einem eingefahrenen Zustand und einem ausgefahrenen Zustand bewegbar ist und eingerichtet ist, um die Metallteile im ausgefahrenen Zustand zu halten, wobei der Finger (10) einen Kühlmittelzulauf (31) und einen Kühlmittelablauf (32) sowie einen oder mehrere damit verbundene Kanäle im Innern des Fingers (10) aufweist, wodurch der Finger (10) mit einem Kühlmittel durchströmbar ist; und
eine Fingerkühlung (30), die ein oder mehrere Zulaufdrehgelenke (33, 34, 35), die Rohrdrehgelenke sind, und wenigstens zwei damit verbundene Rohrstücke, wobei eines der Rohrstücke mit dem Kühlmittelzulauf (31) verbunden ist, sowie ein oder mehrere Ablaufdrehgelenke (37, 38, 39), die Rohrdrehgelenke sind, und wenigstens zwei damit verbundene Rohrstücke aufweist, wobei eines der Rohrstücke mit dem Kühlmittelablauf (32) verbunden ist.

2. Fingeranordnung (1) nach Anspruch 1, **dadurch gekennzeichnet, dass** die Fingerkühlung (30) eine Zulaufgelenkschere (36), die mit dem Kühlmittelzulauf (31) verbunden ist, und eine Ablaufgelenkschere (40), die mit dem Kühlmittelablauf (32) verbunden ist, aufweist, wobei die Zulaufgelenkschere (36) und die Ablaufgelenkschere (40) jeweils eine Gelenkschere ist, die drei Rohrdrehgelenke und Rohrstücke, welche die drei Rohrdrehgelenke in Reihe verbinden, aufweist.

3. Fingeranordnung (1) nach Anspruch 1 oder 2, **dadurch gekennzeichnet, dass** die Fingeranordnung (1) ferner ein Gehäuse (20) aufweist, und
ein oder mehrere, vorzugsweise zwei, Zulaufdrehgelenke (33, 34) relativ zum Gehäuse (20) verfahrbar sind, während ein oder mehrere, vorzugsweise ein, Zulaufdrehgelenk (35) relativ zum Gehäuse (20) stationär vorgesehen ist, vorzugsweise am Gehäuse (20) befestigt ist, und/oder ein oder mehrere, vorzugsweise zwei, Ablaufdrehgelenke (37, 38) relativ zum Gehäuse (20) verfahrbar sind, während ein oder mehrere, vorzugsweise ein, Ablaufdrehgelenk (39) relativ zum Gehäuse (20) stationär vorgesehen ist, vorzugsweise am Gehäuse (20) befestigt ist.

4. Fingeranordnung (1) nach einem der vorigen Ansprüche, **dadurch gekennzeichnet, dass** der Finger (10) zwischen dem eingefahrenen Zustand und dem ausgefahrenen Zustand eine kombinierte Bewegung aus einer Schwenkbewegung und einer Translationsbewegung durchführt.

5. Fingeranordnung (1) nach einem der vorigen Ansprüche, **dadurch gekennzeichnet, dass** die Fingeranordnung (1) ferner einen Hydraulikzylinder (11) zum Betätigen des Fingers (10) aufweist, wobei der Hydraulikzylinder (11) mechanisch mit dem Finger (10) gekoppelt ist, vorzugsweise über einen Hebelmechanismus, der vorzugsweise ein Kniehebelmechanismus ist.

6. Fingeranordnung (1) nach einem der vorigen Ansprüche, **dadurch gekennzeichnet, dass** die Rohrstücke unflexibel sind, vorzugsweise sind die Rohrstücke aus einem Metall gefertigt.

7. Vorrichtung zum Vorwärmen von Metallteilen, wobei die Vorrichtung einen Schacht und einen oder mehrere Fingeranordnungen (1) nach einem der vorigen Ansprüche aufweist, wobei die Finger (10) jeweils im ausgefahrenen Zustand in den Schacht hineinragen.

8. Vorrichtung nach Anspruch 7, **dadurch gekennzeichnet, dass** mehrere Finger (10) vorgesehen sind, die in ihren ausgefahrenen Zuständen in unterschiedlichen Längen, vorzugsweise konzentrisch, in den Schacht hineinragen.

9. Schmelzofen, vorzugsweise Elektrolichtbogenofen, mit einem Ofengefäß und einer Vorrichtung nach Anspruch 7 oder 8.

## Claims

1. Finger arrangement (1) for holding metal parts during a preheating process, preferably for use in a shaft above a melting furnace vessel for melting metal parts, wherein the finger arrangement (1) comprises:
a finger (10) which is movable between a retracted state and an extended state and which is arranged to hold the metal parts in the extended state, wherein the finger (10) has a coolant feed (31) and coolant drain (32) as well as one or more channels connected therewith in the interior of the finger (10), whereby a coolant can flow through the finger (10); and
a finger cooler (30) which comprises one or more feed rotary joints (33, 34, 35), which are pipe rotary joints, and at least two pipe sections connected therewith, wherein one of the pipe sections is connected with the coolant feed (31), as well as one or more drain rotary joints (37, 38, 39), which are pipe rotary joints, and at least two pipe sections connected therewith, wherein one of the pipe sections is connected with the coolant drain (32).

2. Finger arrangement (1) according to claim 1, **characterised in that** the finger cooler (30) comprises a feed scissor joint (36) connected with the coolant feed (31) and a drain scissor joint (40) connected with the coolant drain (32), wherein the feed scissor joint (36) and the drain scissor joint (40) are each a scissor joint comprising three pipe rotary joints and pipe sections which connect the three pipe rotary joints in series.

3. Finger arrangement (1) according to claim 1 or 2, **characterised in that** the finger arrangement (1) further comprises a housing (20) and one or more, preferably two, feed rotary joints (33, 34) are movable relative to the housing (20) whilst one or more, preferably one, feed rotary joint (35) is provided to be stationary relative to the housing (20), preferably secured to the housing (20), and/or one or more, preferably two, drain rotary joints (37, 38) are movable relative to the housing (20) whilst one or more, preferably one, drain rotary joint (39) is provided to be stationary relative to the housing (20), preferably secured to the housing (20).

4. Finger arrangement (1) according to any one of the preceding claims, **characterised in that** the finger (10) between the retracted state and the extended state executes a combined movement consisting of a pivot movement and a translational movement.

5. Finger arrangement (1) according to any one of the preceding claims, **characterised in that** the finger arrangement (1) further comprises a hydraulic cylinder (11) for actuating the finger (10), wherein the hydraulic cylinder (11) is mechanically coupled with the finger (10), preferably by way of a lever mechanism, which is preferably a toggle mechanism.

6. Finger arrangement (1) according to any one of the preceding claims, **characterised in that** the pipe sections are inflexible, the pipe sections preferably being made of a metal.

7. Device for preheating metal parts, wherein the device comprises a shaft and one or more finger arrangements (1) according to any one of the preceding claims, wherein the fingers (10) in the extended state each project into the shaft.

8. Device according to claim 7, **characterised in that** a plurality of fingers (10) which in the extended states thereof project by different lengths, preferably concentrically, into the shaft is provided.

9. Melting furnace, preferably electric arc furnace, with a furnace and a device according to claim 7 or 8.

## Revendications

1. Agencement en forme de doigt (1) destiné à la retenue d'éléments métalliques au cours d'un processus de préchauffage, de préférence pour son utilisation dans une cuve au-dessus d'une carcasse d'un four de fusion destiné à la mise en fusion des éléments métalliques; dans lequel l'agencement en forme de doigt (1) présente :
un doigt (10) qui peut être déplacé entre un état rétracté et un état déployé et qui est conçu pour retenir les éléments métalliques à l'état déployé; dans lequel le doigt (10) présente une alimentation (31) destinée à un agent de refroidissement et une évacuation (32) destinée à un agent de refroidissement, ainsi qu'un ou plusieurs canaux qui y sont reliés, à l'intérieur du doigt (10), canaux par l'intermédiaire desquels le doigt (10) peut être traversé par l'agent de refroidissement ; et
un refroidissement pour le doigt (30) qui présente une ou plusieurs articulations cylindriques (33, 34, 35) du côté de l'alimentation, qui représentent des articulations cylindriques de forme tubulaire, et au moins deux tronçons tubulaires qui y sont reliés ; dans lequel un des tronçons tubulaires est relié à l'alimentation (31) destinée à un agent de refroidissement, ainsi qu'une ou plusieurs articulations cylindriques (37, 38, 39) du côté de l'évacuation, qui représentent des articulations cylindriques de forme tubulaire, et au moins deux tronçons tubulaires qui y sont reliés ; dans lequel un des tronçons tubulaires est relié à l'évacuation (32) destinée à un agent de refroidissement.

2. Agencement en forme de doigt (1) selon la revendication 1, **caractérisé en ce que** le refroidissement pour le doigt (30) présente une cisaille articulée (36) du côté de l'alimentation, qui est reliée à l'alimentation (31) destinée à un agent de refroidissement et une cisaille articulée (40) du côté de l'évacuation, qui est reliée à l'évacuation (32) destinée à un agent de refroidissement ; dans lequel la cisaille articulée (36) du côté de l'alimentation et la cisaille articulée (40) du côté de l'évacuation représentent respectivement une cisaille articulée qui présente trois articulations cylindriques de forme tubulaire et trois tronçons tubulaires qui relient en série les trois articulations cylindriques tubulaires.

3. Agencement en forme de doigt (1) selon la revendication 1 ou 2, **caractérisé en ce que** l'agencement en forme de doigt (1) présente en outre un boîtier (20) et une ou plusieurs articulations cylindriques, de préférence deux articulations cylindriques du côté de l'alimentation (33, 34) sont mobiles par rapport au boîtier (20), tandis qu'un ou plusieurs articulations cylindriques, de préférence une articulation cylindrique du côté de l'alimentation (35) est prévu pour être stationnaire par rapport au boîtier (20), de préférence est fixé au boîtier (20) ; et/ou une ou plusieurs articulations cylindriques, de préférence deux articulations cylindriques du côté de l'évacuation (37, 38) sont mobiles par rapport au boîtier (20), tandis qu'une ou plusieurs articulations cylindriques, de préférence une articulation cylindrique du côté de l'évacuation (39) est prévue pour être stationnaire par rapport au boîtier (20), de préférence est fixée au boîtier (20).

4. Agencement en forme de doigt (1) selon l'une quelconque des revendications précédentes, **caractérisé en ce que** le doigt (10) met en oeuvre un mouvement combiné constitué d'un mouvement de pivotement et d'un mouvement de translation entre l'état rétracté et l'état déployé.

5. Agencement en forme de doigt (1) selon l'une quelconque des revendications précédentes, **caractérisé en ce que** l'agencement en forme de doigt (1) présente en outre un cylindre hydraulique (11) destiné à l'actionnement du doigt (10) ; dans lequel le cylindre hydraulique (11) est couplé par voie mécanique au doigt (10), de préférence par l'intermédiaire d'un mécanisme de levier qui représente de préférence un mécanisme sous la forme d'une genouillère.

6. Agencement en forme de doigt (1) selon l'une quelconque des revendications précédentes, **caractérisé en ce que** les tronçons tubulaires sont de type rigide ; de préférence les tronçons tubulaires sont réalisés à partir d'un métal.

7. Dispositif destiné au préchauffage d'éléments métalliques ; dans lequel le dispositif présente une cuve et un ou plusieurs agencement en forme de doigt (1) selon l'une quelconque des revendications précédentes; dans lequel les doigts (10) pénètrent respectivement, à l'état déployé, dans la cuve.

8. Dispositif selon la revendication 7, **caractérisé en ce que** l'on prévoit plusieurs doigts (10) qui, dans leur état déployé, pénètrent dans la cuve à concurrence de longueurs différentes, de préférence en position concentrique.

9. Four de fusion, de préférence four électrique à arc qui comprend une carcasse de four et un dispositif selon la revendication 7 ou 8.
